# EUROPÄISCHE PATENTSCHRIFT

(11) **EP 0 602 391 B1**
(45) Veröffentlichungstag und Bekanntmachung des Hinweises auf die Patenterteilung: **16.10.1996**
(21) Anmeldenummer: 93118314.9
(22) Anmeldetag: 12.11.1993
(51) Int. Cl.: D21B 1/34, D21B 1/32

(54) **Altpapier-Digester**
Waste paper digester
Digesteur pour vieux papiers

(30) Priorität: 05.12.1992 DE 4241039; 25.02.1993 DE 4305687
(43) Veröffentlichungstag der Anmeldung: 22.06.1994
(73) Patentinhaber: J.M. Voith GmbH, D-89522 Heidenheim (DE)
(72) Erfinder: Konecsny, Helmut, Baulkham Hills NSW 2153 (AU)
(74) Vertreter: Weitzel, Wolfgang, Dr.-Ing. Patentanwalt

(56) Entgegenhaltungen:
- DE-B- 1 000 676
- FR-A- 1 204 691

## Beschreibung

Die Erfindung betrifft eine Einrichtung zum Auflösen von Altpapier. Im allgemeinen wird Altpapier in Stofflösern aufgelöst, wobei jedoch ein druckloses Verfahren im wesentlichen bei Temperaturen zwischen 30 und 45° durchgeführt wird.

Es ist auch schon bekannt, Altpapier in einem Stofflöser mit einem kugeligen Gehäuse aufzulösen, in welchem auch eine Entstippung durchgeführt werden kann (siehe H. Mack "Altpapieraufbereitung" Seite 90). Dieser Stofflöser hat einen Deckel, mit dem er verschlossen werden kann.

Vorrichtungen zum Auflösen bzw. Zerlegen von Fasergut sind bspw. aus der DE-B-1 000676 bekanntgeworden.

Die Aufgabe der Erfindung ist es, das Auflösen des Altpapiers effektiver zu gestalten und die Nachteile des Standes der Technik zu überwinden.

Diese Aufgabe wird erfindungsgemäß durch die Merkmale des kennzeichnenden Teils des Patentanspruchs 1 gelöst. Weiterbildungen der Erfindung sind Gegenstand der Unteransprüche.

Es kann in den Stofflöser neben dem Altpapier und Auflöseflüssigkeit (Wasser nebst üblichen Chemikalien) entweder Druckluft (oder ein anderes Druckgas) oder auch hochgespannter Dampf eingeleitet werden, letzteres nachdem der Stofflöser mit einem Deckel, der im allgemeinen oben angeordnet ist, verschlossen wurde. Das Auflösen erfolgt nun sehr effektiv mittels des üblichen Auflöserotors. Man kann Dampf zugeben mit Temperaturen zwischen 50 und 150°C. Man hat sowohl bei Dampf- als auch bei Druckgaszugabe den Vorteil, daß das Entleeren des Behälters ohne zusätzliche Pumpe erfolgen kann.

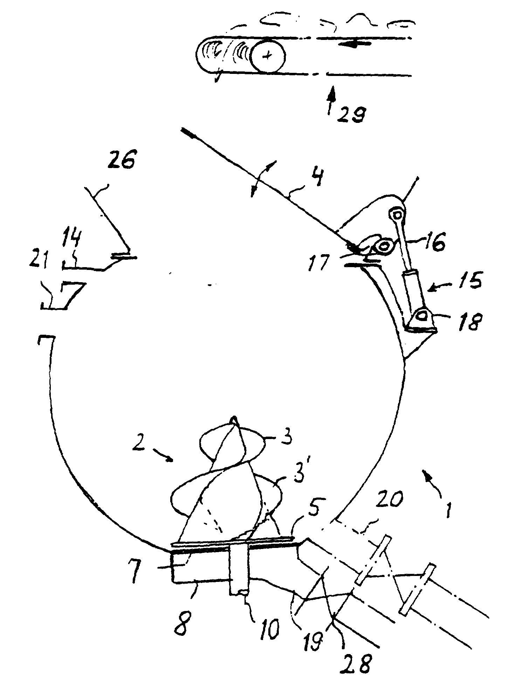

Nachfolgend wird die Erfindung anhand des in der Figur prinzipmäßig dargestellten Ausführungsbeispiels erläutert. Der Stofflöser 1 ist im wesentlichen hier als kugelförmiger Behälter mit einem Deckel 4 und einem Einfülltrichter 26 ausgeführt. Er weist ferner an seinem Boden einen Rotor 2 mit wendelförmigen Umwälzrippen 3 und 3' auf. Der Rotor rotiert auf einer Grundplatte 5 oberhalb eines Siebes 7, das einen Stoffabzugskasten 8 abdeckt. Der Antrieb des Rotors erfolgt über seine Welle 10 von einem hier nicht dargestellten Motor. Der Abzug des aufgelösten Stoffes erfolgt über Leitung 19, nachdem er das Sieb 7 passiert hat und nach Öffnen des Ventils 28.

Die Klappe 4 wird durch die Kolbenstange 16 eines hydraulischen Hubelementes 15 betätigt, das gelenkig an dem Auflager 18 gelagert ist. Der Deckel 4 ist über Drehgelenk 17 an dem Behälter 1 gelagert. Durch Stutzen 14 kann hochgespannter Dampf oder Druckgas und durch Stutzen 21 Wasser zugegeben werden. Eine weitere Zugabeleitung für Chemikalien ist bei 26 angedeutet. Die Zufuhr des Altpapiers erfolgt über ein Förderband 29. Sobald genügend Altpapier im Behälter 1 vorhanden ist, wird der Deckel 4 geschlossen und über Leitung 14 Druckgas oder hochgespannter Dampf zugegeben, welcher einen Druck zwischen 1,2 und 5 bar und eine Temperatur zwischen 50 und 150°C, vorzugsweise zwischen 100 und 130°C, aufweisen kann. Die Druckwerte gelten dementsprechend auch für zugeführtes Druckgas. Als Druckgas kommt die gewöhnlich im Werk vorhandene Druckluft in Frage. Man kann bei Konsistenzen vorzugsweise zwischen 12 und 16 %, aber auch bis zu 25 % auflösen. Wenn der Auflösevorgang weit genug erfolgt ist, wird Ventil 28 geöffnet, und das aufgelöste Altpapier verläßt über Leitung 19 den Behälter 1. Dabei rotiert der Rotor 2 und hält das Sieb 7 frei von Zusetzungen. Ein Restanteil von schlecht aufgelöstem Altpapier kann über Leitung 20 abgezogen werden. Man kann aber auch das Sieb 7 mit Leitung 19 weglassen und das Altpapier weitgehend auflösen und über Leitung 20 als einzige Leitung dann abführen. Das aufgelöste Altpapier, d.h. die Altpapiersuspension kann wie der Zellstoff bei einem Digester in einen Aufnahmebehälter (Blastank) geblasen werden. Durch den hohen Druck bzw. die höhere Temperatur erfolgt das Einwirken der Chemikalien sehr effektiv, und somit ist auch die Auflösearbeit verhältnismäßig günstig.

Ein weiterer großer Vorteil ist, daß Kleber wie Latex, Wachs oder ähnliches sich fein dispergieren, ohne daß ein Dispergiergerät eigens noch eingesetzt werden muß.

## Patentansprüche

1. Verfahren zum Auflösen von Altpapier, wobei das Altpapier in einem gasdicht abschließbaren Behälter (1) unter einem Überdruck mittels Umwälzung durch einen mit Flügeln oder Wendelflächen versehenen Rotor aufgelöst wird und der Überdruck durch Zugabe von Druckluft oder entsprechend hoch gespanntem Dampf erzeugt wird, dadurch gekennzeichnet, daß der Überdruck zwischen 0,3 und 4 bar liegt, und daß das Auflösen bei Temperaturen zwischen 50 und 150°C, vorzugsweise zwischen 100 und 130°C, derart erfolgt, daß im Altpapier enthaltene Kleber wie Latex, Wachs oder ähnliches sich fein dispergieren, ohne daß ein Dispergiergerät noch eigens eingesetzt werden muß.

2. Verfahren nach Anspruch 1, dadurch gekennzeichnet, daß zwischen einzelnen Auflösezyklen der Behälter (1) entleert wird.

3. Verfahren nach Anspruch 1, dadurch gekennzeichnet, daß mittels Zufuhreinrichtungen in Form von Drehschleusenventilen oder einer mit einer Schnecke versehenen Schleuse ein kontinuierlicher Betrieb beim Auflösen durchgeführt wird.

4. Verfahren nach einem der Ansprüche 1 bis 3, dadurch gekennzeichnet, daß das Auflösen im Stofflöser bei einer Konsistenz von mindestens 12 % erfolgt.

5. Verfahren nach einem der Ansprüche 1 bis 4, dadurch gekennzeichnet, daß das Auflösen im Stofflöser bei einer Konsistenz zwischen 12 und 25 % erfolgt.

## Claims

1. Process for repulping waste paper, in which the waste paper is repulped in a gasproof sealable container (1) under excess pressure by means of circulation by a rotor provided with blades or helical surfaces and the excess pressure is produced by adding compressed air or correspondingly highly compressed steam, characterised in that the excess pressure is between 0.3 and 4 bar, and in that the repulping is performed at temperatures of between 50 and 150 °C, preferably between 100 and 130 °C, so that any glues such as latex, wax or the like contained in the waste paper disperse finely without a dispersing device having to be used specifically.

2. Process according to claim 1, characterised in that the container (1) is emptied between individual repulping cycles.

3. Process according to claim 1, characterised in that by means of feeding mechanisms in the form of rotary feedthrough valves or a lock with a screw there is continuous operation on repulping.

4. Process according to one of claims 1 to 3, characterised in that the repulping in the pulper is performed at a consistency of at least 12%.

5. Process according to one of claims 1 to 4, characterised in that the repulping in the pupler is performed at a consistency of between 12 and 25 %.

## Revendications

1. Procédé de déchiquetage de vieux papiers, selon lequel on déchiquète les vieux papiers dans une cuve (1), agencée de façon à pouvoir être fermée d'une manière étanche aux gaz, sous une surpression et au moyen d'une mise en circulation à l'aide d'un rotor pourvu d'ailettes ou de surfaces hélicoïdales et on produit la surpression par un apport d'air comprimé ou de vapeur sous une haute pression correspondante, caractérisé en ce que la surpression est comprise entre 0,3 et 4 bars et en ce que le déchiquetage a lieu à des températures comprises entre 50 et 150 °C, de préférence entre 100 et 130 °C, d'une façon telle que des colles, telles que latex, cire ou analogue, contenues dans les vieux papiers se dispersent finement, sans qu'il soit encore nécessaire d'installer spécialement un appareil de dispersion.

2. Procédé selon la revendication 1, caractérisé en ce qu'on vide la cuve (1) entre différents cycles de déchiquetage.

3. Procédé selon la revendication 1, caractérisé en ce que, lors du déchiquetage, on procède à un fonctionnement continu au moyen de dispositifs d'apport sous forme de valves à sas rotatif ou d'un sas pourvu d'une vis sans fin.

4. Procédé selon l'une des revendications 1 à 3, caractérisé en ce que le déchiquetage dans le pulpeur a lieu avec une consistance d'au moins 12%.

5. Procédé selon l'une des revendications 1 à 4, caractérisé en ce que le déchiquetage dans le pulpeur a lieu avec une consistance comprise entre 12 et 25%.
